# EUROPEAN PATENT SPECIFICATION

(11) **EP 2 985 907 B1**
(45) Date of publication and mention of the grant of the patent: **27.02.2019**
(21) Application number: 14782255.5
(22) Date of filing: 03.04.2014
(51) Int. Cl.: H02P 29/00, G05B 11/36, H02P 23/00

(54) **MOTOR DRIVE DEVICE**
MOTORANTRIEBSVORRICHTUNG
DISPOSITIF D'EXCITATION DE MOTEUR

(30) Priority: 09.04.2013 JP 2013080946
(43) Date of publication of application: 17.02.2016
(73) Proprietor: Panasonic Intellectual Property Management Co., Ltd., Osaka-shi, Osaka 540-6207 (JP)
(72) Inventor: SUZUKI, Kenichi, Osaka-shi, Osaka 540-6207 (JP); NISHIZONO, Masaru, Osaka-shi, Osaka 540-6207 (JP); FUJIWARA, Hiroshi, Osaka-shi, Osaka 540-6207 (JP)
(74) Representative: SSM Sandmair
(86) International application number: PCT/JP2014/001934
(87) International publication number: WO 2014/167808

(56) References cited:
- JP-A- H06 242 803
- JP-A- H09 171 410
- JP-A- 2000 172 341
- JP-A- 2006 197 778
- JP-A- 2007 135 344
- JP-A- 2009 070 396
- JP-A- 2011 176 995
- JP-A- 2012 130 160
- US-A- 5 710 498
- US-A1- 2007 007 920
- US-A1- 2007 007 927
- US-B1- 6 470 225

## Description

### TECHNICAL FIELD

The present invention relates to a motor drive device used for controlling and driving a servomotor, and in particular, relates to a motor drive device having a function of compensating viscous friction.

### BACKGROUND ART

Appropriate compensation for friction torques produced with operation of a servomotor and load has an important role in shortening a positioning settling time and improving path following accuracy when controlling the motor. Among these friction torques, those such as unbalanced load and dynamic friction torques having definite values can be compensated with an integral term of a feedback control system. However, it is not possible for the integral compensation to keep up with viscous friction which varies in proportion to the motor speed, thereby resulting in overshooting during the positioning settling and impairing following accuracy in the path control.

Patent literature 1, for instance, offers a compensation technique for viscous friction torques of this kind. This compensation technique is provided with means of estimating a viscous friction coefficient that is a ratio of motor speed and viscous friction torque. This compensation technique is configured to obtain a compensation value of the viscous friction torque by multiplying an actual motor speed by an estimated value of the viscous friction coefficient, and to add the compensation value to a torque command. In patent literature 2, friction compensation is accomplished by determining a feedforward gain of speed integral term based on an estimated value of viscous friction coefficient, multiplying the feedforward gain by a model speed, and subtracting the product from an input of an integral compensation means.

In the technique of patent literature 1, however, the control tends to become unstable in proximity of 0 (zero) speed where the sign of the estimated value of viscous compensating torque reverses according to the sign of speed since it is based on the actual motor speed. Moreover, in the technique of patent literature 2, the torque command to be generated in the feedforward process comes to decrease equivalently. Although the torque command is necessary to follow a position command, it prolongs a positioning settling time and impairs the path following accuracy because of such an equivalent decrease.

Furthermore, although both examples of the conventional techniques use estimated values of the viscous friction coefficient, the estimated values do not necessarily become optimum values depending on the purpose of control. In a case where the purpose is to make positioning control, for instance, the positioning settling time does not become the shortest even when the estimated value is used as it is. The conventional techniques do not provide any means of solving this problem.
US 2007/0007927 A1 discloses a position controller having a feedforward system including a friction-coefficient-estimated-value setting unit for setting arbitrary friction-coefficient-estimated-values; an overshoot-prevention-gain calculator for determining speed-integral-term feedforward gain, based on estimated friction-coefficient values set by the friction-coefficient-estimated-value setting unit; and a speed feedforward multiplying unit for calculating the product of the speed-integral-term feedforward gain multiplied by a feedforward command value that is based on a positional command; the multiplication product from the speed feedforward multiplying unit being used to reduce the feedforward term
In US 6,470,225 B1 a method and apparatus for automatically tuning feedforward parameters is disclosed, such that feedforward commands can be generated and used in addition to traditional control commands to compensate for known system characteristics. In an exemplary embodiment, feedforward gains are automatically determined after moving an actuator controlled axis, such as a motor imparting motion to a linear slide, through a test motion routine and recording operation data associated with the actuator and axis during the movement. The operation data can include velocity measurements and torque commands. The feedforward gains which are tuned can include a Coulomb friction feedforward gain, a viscous friction feedforward gain, a constant offset feedforward gain, an acceleration feedforward gain, and estimates of velocity loop compensator gains. Capability can also be provided for automatic generation of the test motion routine based upon actuator limit values provided by the user.

### Citation List:

### Patent literatures

PTL 1: Japanese Patent Unexamined Publication No. 1995-333084
PTL 2: International Application Publication No. 2006/011203

### SUMMARY OF THE INVENTION

A motor drive device according to claim 1 is intended to drive a motor while performing feedback control so that actual operation follows a command. This motor drive device includes a feedback controller for performing feedback control by outputting a torque command, and a viscous friction calculator for calculating a viscous friction torque compensation value by multiplying a speed command by a viscous friction coefficient. The motor drive device is configured to drive the motor on the basis of a driving signal generated by adding the viscous friction torque
compensation value to the torque command.

The motor drive device further includes a command response filter for generating a post-filtered position command by smoothing a position command. The motor drive device then generates the speed command from a difference of the post-filtered position command.

The motor drive device may further include an evaluation index measurement section for measuring an amount of overshooting and a positioning settling time by inputting the position command and any of a motor position and a load position, and a servo adjustment section for repeating positioning operation a plurality of times while changing the viscous friction coefficient, and determining a value of the viscous friction coefficient that brings the amount of overshooting to a specified value or the positioning settling time to a minimum.

With the motor drive device of a preferred embodiment of the present invention, it becomes possible by virtue of the above configuration to perform viscous friction compensation steadily with less delay than the conventional compensation technique using a motor speed, without being influenced by external turbulence. Furthermore, the settling time can also be shortened in the positioning control, as compared to the case in which the viscous friction estimated value is applied as it is.

### BRIEF DESCRIPTION OF DRAWINGS

FIG. 1A is a block diagram of a motor drive device according to a first exemplary embodiment of the present invention.
FIG. 1B is a block diagram showing one example of configuration of a viscous friction calculator according to the first exemplary embodiment of the invention.
FIG. 2 is a block diagram of a motor drive device according to a second exemplary embodiment of the present invention.
FIG. 3 is a configuration diagram showing one concept of an evaluation index measurement section according to the second exemplary embodiment of the invention.
FIG. 4 is a flow chart of viscous friction compensation process performed by a servo adjustment section according to the second exemplary embodiment of the invention.
FIG. 5 is a graph showing waveforms in positioning settling process according to the second exemplary embodiment of the invention.
FIG. 6 is a graph showing the waveforms (with the vertical axis enlarged) in the positioning settling process according to the second exemplary embodiment of the invention.
FIG. 7 is another graph showing the waveforms (with the vertical axis further enlarged) in the positioning settling process according to the second exemplary embodiment of the invention.
FIG. 8 is a flow chart of a servo adjustment section according to a third exemplary embodiment of the present invention.

### DETAILED DESCRIPTION OF THE INVENTION

Description is provided hereinafter of exemplary embodiments of the present invention with reference to the accompanying drawings.

### FIRST EXEMPLARY EMBODIMENT

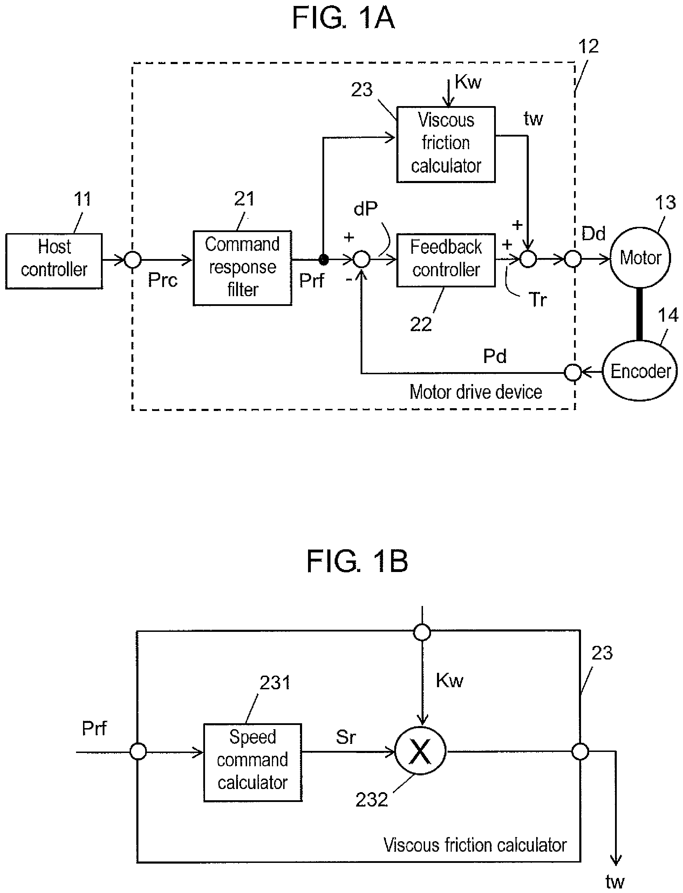

FIG. 1A is a block diagram including motor drive device 12 according to the first exemplary embodiment of the present invention.

As shown in FIG. 1A, position command Prc generated by host controller 11 for directing a position is input to motor drive device 12. Motor drive device 12 generates driving signal Dd according to position command Pre, and drives motor 13 using this driving signal Dd. A position of a movable component of motor 13 is thus controlled. Encoder 14 detects the position of the movable component controlled in this manner, and conveys it to motor drive device 12 as motor position information Pd.

In motor drive device 12, command response filter 21 smoothes received position command Prc, and outputs post-filtered position command Prf that is a position command after filtered. This smoothing process is carried out by using any of a first-order lag filter, a second-order filter, a running average filter, or the like means that attenuate a high frequency band. This process may alternatively be configured so as to perform command response filtering process on a difference of position command Prc, and convert it back into the positional dimension by product-sum operation if necessary. Such a configuration can reduce complexity of the calculation.

Post-filter position command Prf is compared with motor position information Pd from encoder 14, and feedback controller 22 generates torque command Tr based on position deviation dP which is a difference between post-filtered position command Prf and motor position information Pd. Various control structures can be considered to configure feedback controller 22, as represented typically by PID (proportion, integration and differentiation) control. There are also numerous variations such as a cascade loop structure of position and speed based on information of the speed and acceleration, including not only position deviation dP but also position command Prc or motor position information Pd and the differential thereof, and a two-degree-of-freedom structure configured to set a command response and a turbulence response individually. In all of the cases, their objects are common in the point that feedback controller 22 generates torque command Tr that brings the position deviation close to 0 (zero), and motor drive device 12 drives the motor while carrying out feedback control so that the actual operation follows the command. It is also possible to employ a full-closed configuration having an external scale, not shown in the figure, for detecting a position of the load connected to motor 13, instead of motor position information Pd from encoder 14. This configuration helps calculate the position deviation, i.e., a difference between the external scale and the position command, more accurately.

Next, viscous friction calculator 23 generates and outputs viscous friction torque compensation value tw by using post-filtered position command Prf it receives as an input. FIG. 1B is a block diagram showing one example of configuration of viscous friction calculator 23. As shown in FIG. 1B, viscous friction calculator 23 converts position command Prf into speed command Sr firstly by using speed command calculator 231 to calculate temporal difference of position command Prf. That is, speed command calculator 231 calculates speed command Sr from variations with time of position command Prf by differentiating position command Prf. After this, viscous friction calculator 23 generates and outputs viscous friction torque compensation value tw by using multiplier 232 to multiply speed command Sr by viscous friction coefficient Kw estimated by a separate means. Although viscous friction calculator 23 may be provided with speed command calculator 231, it is possible to eliminate speed command calculator 231 when command response filter 21 makes calculation with a difference as stated previously, so that this difference can be used.

In this exemplary embodiment, viscous friction torque compensation value tw is generated based on speed command Sr provided as a command rather than an actual motor speed. In addition, viscous friction torque compensation value tw is generated using position command Prf that is the output of command response filter 21. Because smoothed speed command Sr is used in this embodiment as described, viscous friction torque compensation value tw becomes steadier compared to the motor speed that may otherwise be disturbed by turbulent torque and a resonance characteristic of the load. It is also feasible to achieve further stabilization of viscous friction torque compensation value tw by providing speed command Sr with a dead band, and smoothing it with a filtering process by viscous friction calculator 23.

Finally, driving signal Dd is produced by adding viscous friction torque compensation value tw to torque command Tr. As described above, the viscous friction changes in proportion to the motor speed. To such a viscous friction, a part of the viscous friction torque that exists in actual motor 13 and the connected load is compensated by the configuration in this embodiment, in which viscous friction torque compensation value tw generated on the basis of speed command Sr is included in driving signal Dd. The provision of such a compensating function can achieve stable compensation with a less delay and not influenced by turbulences as compared to the viscous friction compensation that uses a motor speed.

### SECOND EXEMPLARY EMBODIMENT

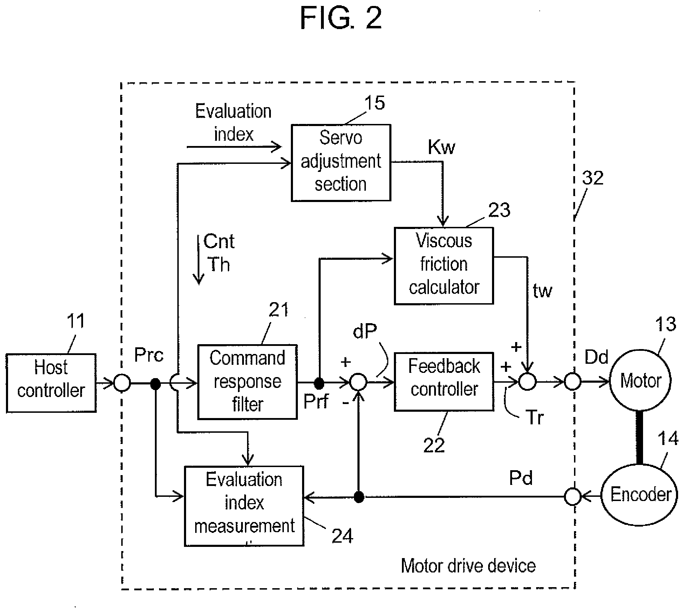

FIG. 2 is a block diagram including motor drive device 32 according to the second exemplary embodiment of the present invention.

In FIG. 2, same reference marks are used to designate same components as those of FIG. 1A and their details will be omitted. Motor drive device 32 of the second embodiment shown in FIG. 2 further includes evaluation index measurement section 24 and servo adjustment section 15, in addition to the configuration of FIG. 1A.

Evaluation index measurement section 24 receives position command Prc and motor position information Pd, and outputs an evaluation index.

Servo adjustment section 15 changes viscous friction coefficient Kw of viscous friction calculator 23, and determines an optimum value of viscous friction coefficient Kw by obtaining the evaluation index output from evaluation index measurement section 24 every time the positioning operation is performed.

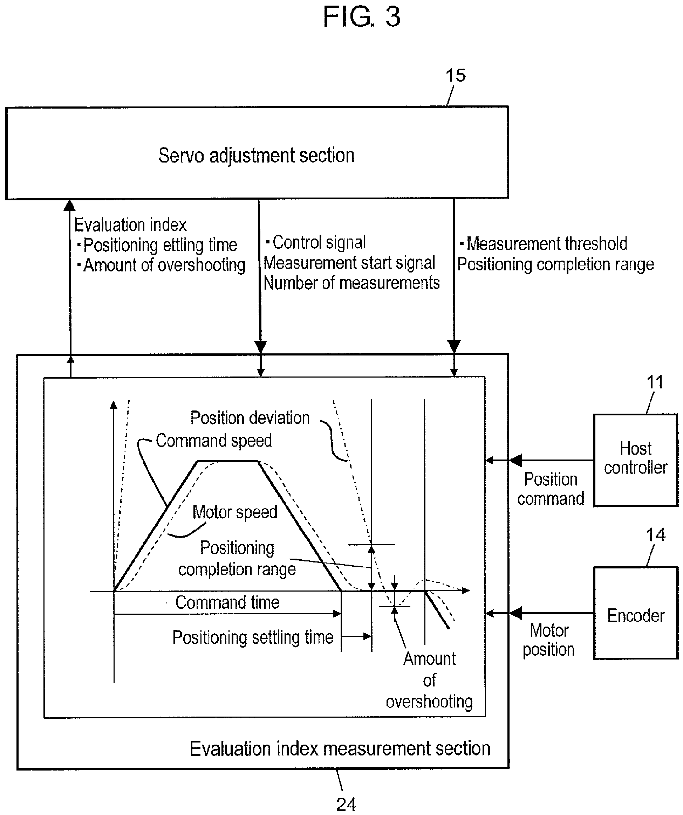

FIG. 3 is a configuration diagram showing one concept of evaluation index measurement section 24 according to the present embodiment.

Evaluation index measurement section 24 receives control signal Cnt and measurement threshold Th, which are necessary to measure two evaluation indices, i.e., an amount of overshooting and a positioning settling time, from servo adjustment section 15. Although definitions and calculation methods of the evaluation indices vary widely, they are defined here as follows.

The positioning settling time is measured as a time required for position deviation dP, i.e., a difference between position command Prf and motor position information Pd, to fall within a positioning completion range given by servo adjustment section 15, after position command Prc from host controller 11 ceases. In an instance where position deviation dP departs from within the positioning completion range after it has once fallen inside, the positioning settling time is defined as a time until it finally comes into the positioning completion range.

The amount of overshooting is defined as an absolute value of one of the largest and smallest position deviations dP selected as having a direction opposite to the direction of position command Prc. Therefore, the amount of overshooting always becomes 0 (zero) or a larger value. In an instance where two or more overshooting occur, an absolute value of one having the largest peak becomes the amount of overshooting.

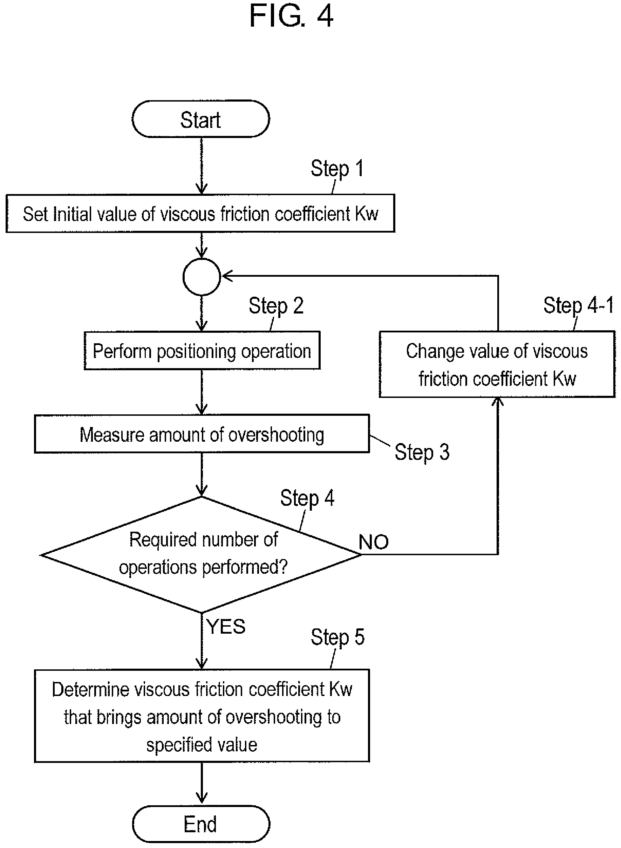

FIG. 4 is a flow chart of viscous friction compensation process performed by servo adjustment section 15 according to the present embodiment.

In step 1, servo adjustment section 15 sets an initial value of viscous friction coefficient Kw with viscous friction calculator 23. A positioning process is then carried out in step 2. Upon completion of the positioning process, evaluation index measurement section 24 calculates an amount of overshooting in step 3. In step 4, determination is made as to whether the positioning process has been carried out a required number of times. If the positioning processes carried out have not reached the required number ("NO"), viscous friction coefficient Kw is changed in step 4-1, and the operation goes back to the step 2. When the required number of positioning processes is found to have been carried out ("YES") in the step 4, the operation proceeds to step 5. In step 5, servo adjustment section 15 compares the amount of overshooting at each trial with a specified value, and determines the one having the amount of overshooting closest to and below the specified value as to be a value of viscous friction coefficient Kw.

As described, servo adjustment section 15 in the present embodiment determines an optimum value of viscous friction coefficient Kw that is the value when the amount of the overshoot becomes closest to and below the specified value. Servo adjustment section 15 sets the thus-determined optimum value as viscous friction coefficient Kw with viscous friction calculator 23.

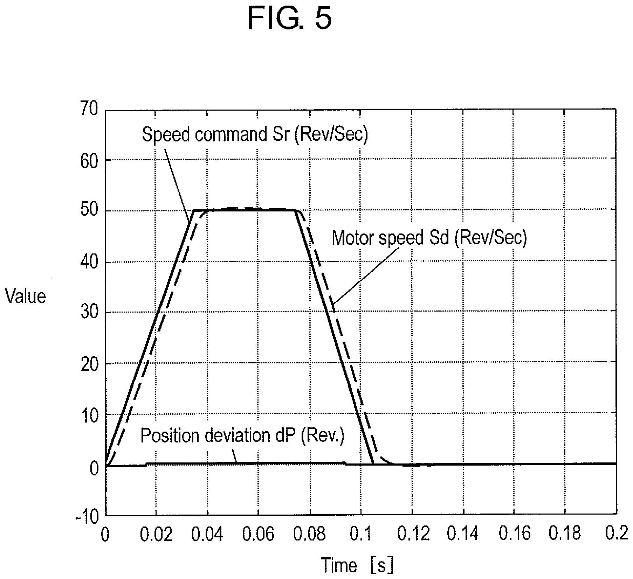

FIG. 5 to FIG. 7 are graphs showing waveforms in the positioning settling process according to the present exemplary embodiment.

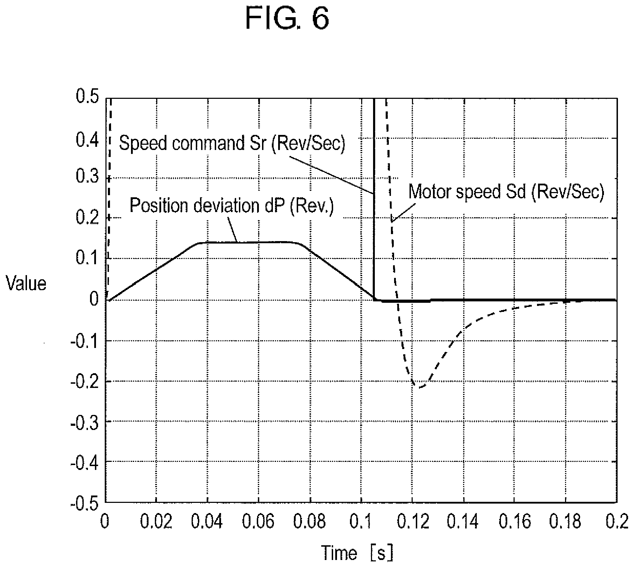

What is shown in this example is a result of control in which a speed command of 3,000 (rev/min) = 50 (rev/sec) at the maximum speed is smoothed by command response filter 21 having a time constant of 2 (msec), and the control is carried out by using position-proportional and speed-proportional integral control represented by a speed response frequency of 50 (Hz) in combination with feedforward control by feedback controller 22. FIG. 5 and FIG. 6 show waveforms in the case where viscous friction coefficient Kw of viscous friction calculator 23 is 0 (zero), and the viscous friction compensation is invalid.

In FIG. 5, a solid line shows speed command Sr (rev/sec) calculated from the difference of position command Prc, and a dotted line shows motor speed Sd (rev/sec) calculated from the difference of motor position information Pd. Motor speed Sd shows a delay because it follows post-filtered speed command Prf which is smoothed by command response filter 21. An amount derived by integrating the difference between these speed command Sr and motor speed Sd becomes position deviation dP (revolution).

FIG. 6 is the same graph as FIG. 5 of which the vertical axis is enlarged to make the position deviation dP (revolution) easily comprehendible. Position deviation dP increases approximately proportionally to speed command Sr. It is also known that motor speed Sd overshoots at a time of positioning settling due to viscous friction torque that exists in the actual apparatus. This causes position deviation dP to overshoot, though it is not clearly comprehendible from this graph.

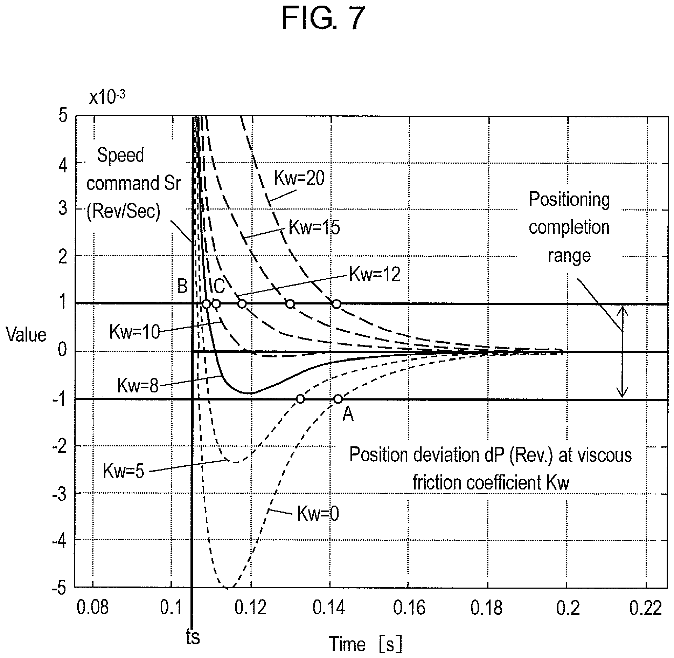

FIG. 7 is another graph of which the vertical axis is enlarged further than FIG. 6, and the horizontal axis is enlarged to make time-base changes of position deviation dP from the time ts easily comprehendible when the position command ceases at a point of 0.105 sec. until position deviation dP falls in a positioning completion range. In addition, FIG. 7 includes waveforms of a plurality of position deviations when viscous friction coefficient Kw of viscous friction calculator 23 is changed from 0 (zero), whereas the waveform of motor speed Sd is omitted. The positioning completion range provided by servo adjustment section 15 is 1/1000 (revolution) that corresponds to just one graduation in FIG. 7.

The same waveform as those through FIG. 6 of which viscous friction compensation is invalidated is the lowest one marked as viscous friction coefficient Kw = 0 (in dotted line). In this setting, the position deviation dP once enters inside of the positioning completion range from a positive value, but it overshoots into a negative direction and goes outside of the positioning completion range, as shown in FIG. 6. A positioning settling time therefore comes to point A at which the position deviation dP enters the positioning completion range again, indicating that it takes so long a time as 38 msec.

The amount of overshooting becomes smaller and the positioning settling time also becomes shorter when the viscous friction coefficient is increased to Kw = 5 (in dotted line).

With viscous friction coefficient at Kw = 8 (in solid line), the amount of overshooting becomes smaller than a value in the positioning completion range for the first time. In this case, the positioning settling time shifts to point B at the positive side, and becomes significantly shorter to 4 msec. since position deviation dP does not exceed the positioning completion range on the negative side.

Although viscous friction coefficient Kw = 10 (in dotted line) has a value closest to the viscous friction coefficient estimated value of the control target, a positioning settling time becomes 6 msec. at point C, which is later than that of Kw = 8 by 2 msec. Moreover, the positioning settling time becomes later again when viscous friction coefficient Kw is further increased to 12, 15 and 20 (all in dotted line).

It becomes apparent from the above finding that the settling time in the positioning operation can be decreased to the shortest by setting the specified value of the amount of overshooting in the step 5 of FIG. 4 to a value within the positioning completion range. An operating pattern of the position command and the positioning completion range change in various manners in the actual operation, and the optimum value of the viscous friction coefficient also becomes different. An optimum setting value for each of the operations can be found by searching for those described above.

Generally, the amount of overshooting is desirably not to exceed the positioning completion range in the positioning operation. When taking this into consideration, it is preferable to allow a certain margin for the above-stated specified value. It is also preferable to suppress an influence of variations in the measurement by repeating the positioning settling operation a plurality of times with the same viscous friction coefficient, and using an average value of amounts of overshooting. Furthermore, it is also effective to take a largest value of the amounts of overshooting, and use it to substitute for the margin in consideration of the variations.

It is recommended to use estimation results of various algorithms for estimating viscous friction when selecting the initial value of viscous friction coefficient Kw in the step 1. For example, a viscous friction coefficient can be estimated easily by using the least squares method with inputs of a motor speed and a torque command. Estimation of the viscous friction coefficient is also possible by dividing a change in torque command by a change in motor speed from the start of acceleration to the end of the acceleration, as are obtainable through observation of an operating waveform.

In the present embodiment, although the positioning operation in the step 2 is carried out according to position command Prc provided by host controller 11, it is easier to control the positioning operation and measurement of an evaluation index with a position command generated inside if motor drive device 12 is equipped with a built-in position command generator, as is needless to note.

In the step 4-1 for changing the viscous friction coefficient, various methods are considered available for searching a value of the viscous friction coefficient such as changing the viscous friction coefficient from the beginning at intervals of a given value starting from 0 (zero) or by using the dichotomizing search, besides the method of varying the viscous friction coefficient from 0 (zero) to 20, i.e., twice the estimation value, with Kw = 10 at the center in the above example.

### THIRD EXEMPLARY EMBODIMENT

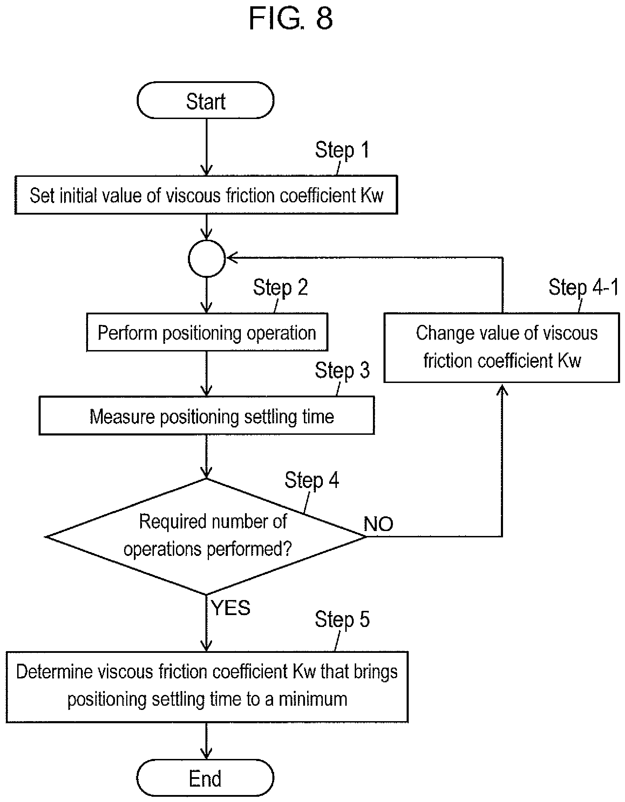

FIG. 8 is a flow chart of compensation process for the viscous friction carried out by servo adjustment section 15 according to the third exemplary embodiment.

In the present embodiment, steps 1, 2, 4 and 4-1 are same as those of FIG. 4, whereas evaluation index measurement section 24 measures a positioning settling time in step 3. In addition, viscous friction coefficient Kw that makes the positioning settling time smallest is output in step 5, after repeating the positioning operation the required number of times.

As described, servo adjustment section 15 in the present embodiment determines the optimum value of viscous friction coefficient Kw that makes the positioning settling time smallest. Servo adjustment section 15 thus have viscous friction calculator 23 set the optimum viscous friction coefficient Kw determined in this manner.

With this method, viscous friction coefficient Kw = 8 which is same as that of the second embodiment is also selected, as can be known when observed in comparison with the changes in the positioning settling time of FIG. 7. An advantage of this method is its capability of calculating the optimum value based on the positioning settling time even when position deviation becomes oscillatory and the amount of overshooting does not fall within the positioning completion range due to such a case where a resonance point in a low frequency band exists. It may therefore be desirable to use this method together with the method of the second embodiment 2.

As described above, the motor drive device of the present invention can achieve the viscous friction compensation steadily with less delay than the conventional compensation technique using the motor speed, and without being influenced by external turbulence by virtue of performing the viscous friction compensation using the smoothed speed command. Furthermore, in the positioning control, the settling time can also be reduced as compared to the case that applies the viscous friction estimated value as it is.

Although the description provided above is an example in which servo adjustment section 15 disclosed in the present invention is equipped within the motor drive device in each of the exemplary embodiments, none of the advantageous effects of the invention is impaired even if all of the functions are provided outside of the motor drive device.

### INDUSTRIAL APPLICABILITY

A motor drive device of the present invention is useful for controlling a servomotor since the device is capable of performing optimum viscous friction compensation in controlling the servomotor.

### REFERENCE MARKS IN THE DRAWINGS

- 11: host controller
- 12, 32: motor drive device
- 13: motor
- 14: encoder
- 15: servo adjustment section
- 21: command response filter
- 22: feedback controller
- 23: viscous friction calculator
- 24: evaluation index measurement section

## Claims

1. A motor drive device (12;32) for performing a positioning operation by driving a motor (13) while performing feedback control so that actual operation follows a position command for commanding a position, the motor drive device comprising:
a feedback controller (22) for performing feedback control by generating a torque command based on a position deviation which is a difference between the position command and a detected position information, and outputting the torque command;
a speed command calculator (231) for calculating a speed command based on a temporal difference of the position command;
a viscous friction calculator (23) for calculating a viscous friction torque compensation value by multiplying the speed command by a viscous friction coefficient;
**characterized by**
an evaluation index measurement section (24) for measuring an evaluation index of the position deviation until a positioning of the positioning operation is completed;
a servo adjustment section (15) for determining an optimum value of the viscous friction coefficient based on the evaluation index informed from the evaluation index measurement section (24), and setting the optimum value of the viscous friction coefficient with the viscous friction calculator (23); and
an adder for adding the viscous friction torque compensation value to the torque command, and outputting as a driving signal to drive the motor (13),
wherein
the servo adjustment section (15) repeats the positioning operation a plurality of times while changing the viscous friction coefficient, and obtains the evaluation index output from the evaluation index measurement section (24) every time the positioning operation is performed; and
the servo adjustment section (15) determines the viscous friction coefficient as the optimum value when the obtained evaluation index becomes the specified value of the predetermined position deviation.

2. The motor drive device (12; 32) of claim 1 further comprising a command response filter (21) for generating a post-filtered position command by smoothing the position command, wherein
the motor drive device (12; 32) generates the speed command from a difference of the post-filtered position command.

3. The motor drive device (12; 32) of claim 1 or 2, wherein
the evaluation index of the position deviation to determine the optimum value of the viscous friction coefficient is an amount of overshooting of the position deviation until the positioning is completed.

4. The motor drive device (12; 32) of claim 1 or 2, wherein
the evaluation index of the position deviation to determine the optimum value of the viscous friction coefficient is a positioning settling time of the position deviation until the positioning is completed; and
the servo adjustment section (15) determines the viscous friction coefficient as the optimum value when the positioning settling time as the specified value becomes a minimum.

## Patentansprüche

1. Motoransteuereinrichtung (12; 32), um einen Positionierungsvorgang durch Ansteuern eines Motors (13) durchzuführen, während eine Rückkopplungssteuerung derart durchgeführt wird, dass der tatsächliche Vorgang einer Positionsanweisung zum Anweisen einer Position folgt, wobei die Motoransteuereinrichtung Folgendes umfasst:
eine Rückkopplungssteuereinheit (22), um eine Rückkopplungssteuerung durch Erzeugen einer Drehmomentanweisung auf der Grundlage einer Positionsabweichung, die eine Differenz zwischen der Positionsanweisung und detektierten Positionsinformationen ist, und Ausgeben der Drehmomentanweisung durchzuführen;
einen Geschwindigkeitsanweisungsrechner (231), um eine Geschwindigkeitsanweisung auf der Grundlage einer zeitlichen Differenz der Positionsanweisung zu berechnen;
einen Rechner (23) für viskose Reibung, um einen Kompensationswert für ein viskoses Reibungsmoment durch Multiplizieren der Geschwindigkeitsanweisung mit einem viskosen Reibungskoeffizienten zu berechnen;
**gekennzeichnet durch**
einen Auswertungsindexmessabschnitt (24), um eine Auswertungsindex der Positionsabweichung, bis eine Positionierung des Positionierungsvorgangs abgeschlossen ist, zu messen;
einen Servoeinstellabschnitt (15), um einen optimalen Wert des viskosen Reibungskoeffizienten auf der Grundlage des Auswertungsindex, der vom Auswertungsindexmessabschnitt (24) mitgeteilt wird, zu bestimmen und den optimalen Wert des viskosen Reibungskoeffizienten mit dem Rechner (23) für viskose Reibung einzustellen; und
einen Addierer, um den Kompensationswert für ein viskoses Reibungsmoment zur Drehmomentanweisung zu addieren und jenes als ein Ansteuersignal, um den Motor (13) anzusteuern, auszugeben, wobei
der Servoeinstellabschnitt (15) den Positionierungsvorgang mehrere Male wiederholt, während er den viskosen Reibungskoeffizienten ändert, und den Auswertungsindex, der vom Auswertungsindexmessabschnitt (24) ausgegeben wird, jedes Mal, wenn der Positionierungsvorgang durchgeführt wird, erhält; und
der Servoeinstellabschnitt (15) den viskosen Reibungskoeffizienten als den optimalen Wert bestimmt, wenn der erhaltene Auswertungsindex der bestimmte Wert der vorgegebenen Positionsabweichung ist.

2. Motoransteuereinrichtung (12; 32) nach Anspruch 1, die ferner ein Anweisungsantwortfilter (21) umfasst, um eine nachgefilterte Positionsanweisung durch Glätten der Positionsanweisung zu erzeugen, wobei
die Motoransteuereinrichtung (12; 32) die Geschwindigkeitsanweisung aus einer Differenz der nachgefilterten Positionsanweisung erzeugt.

3. Motoransteuereinrichtung (12; 32) nach Anspruch 1 oder 2, wobei
der Auswertungsindex der Positionsabweichung, um den optimalen Wert des viskosen Reibungskoeffizienten zu bestimmen, ein Betrag einer Überschreitung der Positionsabweichung, bis die Positionierung abgeschlossen ist, ist.

4. Motoransteuereinrichtung (12; 32) nach Anspruch 1 oder 2, wobei
der Auswertungsindex der Positionsabweichung, um den optimalen Wert des viskosen Reibungskoeffizienten zu bestimmen, eine Positionierungsabwicklungszeit der Positionsabweichung, bis die Positionierung abgeschlossen ist, ist; und
der Servoeinstellabschnitt (15) den viskosen Reibungskoeffizienten als den optimalen Wert bestimmt, wenn die Positionierungsabwicklungszeit als der bestimmte Wert ein Minimum erreicht.

## Revendications

1. Dispositif d'entraînement de moteur (12; 32) destiné à effectuer une opération de positionnement par entraînement d'un moteur (13) tout en effectuant une commande de rétroaction de manière qu'une opération réelle suit une commande de position permettant de commander une position, le dispositif d'entraînement de moteur comprenant :
un dispositif de commande de rétroaction (22) destiné à effectuer une commande de rétroaction par la génération d'une commande de couple en fonction d'une déviation de position qui est une différence entre la commande de position et une information de position détectée, et
l'émission de la commande de couple ;
un calculateur de commande de vitesse (231) destiné à calculer une commande de vitesse en fonction d'une différence temporelle de la commande de position ;
un calculateur de frottement visqueux (23) destiné à calculer une valeur de compensation de couple de frottement visqueux par la multiplication de la commande de vitesse par un coefficient de frottement visqueux ;
**caractérisé par** une section de mesure d'indice d'évaluation (24) destiné à mesurer un indice d'évaluation de la déviation de position jusqu'à ce qu'un positionnement de l'opération de positionnement soit achevé ;
une section de réglage d'asservissement (15) destinée à déterminer une valeur optimale du coefficient de frottement visqueux en fonction de l'indice d'évaluation informé à partir de la section de mesure d'indice d'évaluation (24), et la définition de la valeur optimale du coefficient de frottement visqueux avec un calculateur de frottement visqueux (23) ; et
un additionneur destiné à ajouter la valeur de compensation de couple de frottement visqueux à la commande de couple, et émettre en tant que signal d'entraînement pour entraîner le moteur (13),
la section de réglage d'asservissement (15) répétant l'opération de positionnement une pluralité de fois tout en changeant le coefficient de frottement visqueux, et permettant d'obtenir l'indice d'évaluation émis depuis la section de mesure d'indice d'évaluation (24) chaque fois que l'opération de positionnement est effectuée ; et
la section de réglage d'asservissement (15) déterminant le coefficient de frottement visqueux comme valeur optimale lorsque l'indice d'évaluation obtenu devient la valeur spécifiée de la déviation de position prédéterminée.

2. Dispositif d'entraînement de moteur (12 ; 32) selon la revendication 1 comprenant en outre un filtre de réponse de commande (21) destiné à générer une commande de position post-filtrée par la régularisation de la commande de position,
le dispositif d'entraînement de moteur (12 ; 32) générant la commande de vitesse à partir d'une différence de la commande de position post-filtrée.

3. Dispositif d'entraînement de moteur (12 ; 32) selon la revendication 1 ou 2, dans lequel
l'indice d'évaluation de la déviation de position pour déterminer la valeur optimale du coefficient de frottement visqueux est une quantité de dépassement de la déviation de position jusqu'à ce que le positionnement soit achevé.

4. Dispositif d'entraînement de moteur (12 ; 32) selon la revendication 1 ou 2, dans lequel
l'indice d'évaluation de la déviation de position pour déterminer la valeur optimale du coefficient de frottement visqueux est temps d'établissement de positionnement de la déviation de position jusqu'à ce que le positionnement soit achevé ; et
la section de réglage d'asservissement (15) détermine le coefficient de frottement visqueux comme valeur optimale lorsque le temps d'établissement de positionnement en tant que valeur spécifiée devient un minimum.
